(19) Europäisches Patentamt
European Patent Office
Office européen des brevets

(11) **EP 2 437 383 A2**

(12) **EUROPÄISCHE PATENTANMELDUNG**

(43) Veröffentlichungstag:
04.04.2012 Patentblatt 2012/14

(51) Int Cl.:
*H02M 1/12* (2006.01)          *H02J 3/01* (2006.01)
*H02J 3/18* (2006.01)

(21) Anmeldenummer: **11007789.8**

(22) Anmeldetag: **23.09.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.10.2010 DE 102010047452**
**18.11.2010 DE 102010051767**

(71) Anmelder: **Liebherr-Elektronik GmbH**
**88131 Lindau (DE)**

(72) Erfinder:
• **Engler, Alfred, Dr.-Ing.**
**88138 Sigmarszell (DE)**
• **Liebig, Sebastian, Dipl.-Ing. (FH)**
**88131 Bodolz (DE)**

(74) Vertreter: **Laufhütte, Dieter et al**
**Lorenz-Seidler-Gossel**
**Widenmayerstrasse 23**
**80538 München (DE)**

(54) **Module für ein aktives Netzfilter und aktives Netzfilter**

(57) Die Erfindung betrifft ein Modul für ein aktives Netzfilter zur Bestimmung der Referenzströme für eine nachfolgende Stromregelung mit einem Transformationsmittel zur Transformation, insbesondere Clarke-Transformation, der eingehenden Ströme, insbesondere der eingehenden Lastströme, und/oder der Netzspannungen ins ruhende $\alpha$-$\beta$-Koordinatensystem und einem ersten Berechnungsmittel zur Bestimmung der Wirkleistung der Last, wobei ein zweites Berechnungsmittel vorgesehen ist, dass unter Berücksichtigung der Wirkleistung und der $\alpha$-$\beta$-Komponente der Netzspannung direkt die Referenzströme berechnet. Die Erfindung betrifft des weiteren ein Modul für ein aktives Netzfilter zur Kompensierung eines oder mehrerer harmonischer Ströme oder Spannungen mit einem Mittel für die selektive Signalanalyse, wobei mit dem Mittel für die selektive Signalanalyse wahlweise ein oder mehrere harmonische Oberschwingungen der des oder der Ströme oder Spannungen analysierbar sind und auf einen frei wählbaren Wert kompensierbar sind, indem wenigstens ein entsprechender Korrekturstrom bestimmbar und ausgebbar ist. Weiterhin befaßt sich die Erfindung mit einem aktiven Netzfilter zur Kompensierung der durch nichtlineare Verbraucher hervorgerufenen Einflüsse auf ein 3-phasiges Versorgungsnetz mit einem Referenzmodul zur Bestimmung von Referenzströmen, einem Korrekturmodul zur Kompensierung harmonischer Oberwellen und einem Stromregelungsmodul, wobei die generierten Referenzströme des Referenzmoduls und die generierten Korrekturströmen des Korrekturmoduls mittelbar oder unmittelbar am Eingang des Stromregelungsmoduls anliegen.

Fig.1

EP 2 437 383 A2

**Beschreibung**

Die Erfindung befaßt sich mit einem aktiven Netzfilter gemäß dem Oberbegriff des Anspruchs 13 zur Kompensation störender Einflüsse nichtlinearer Verbraucher auf ein Versorgungsnetz. Ferner betrifft die Erfindung notwendige Module gemäß den Oberbegriffen der unabhängigen Ansprüche 1, 7 und 10, die Bestandteil eines derartigen Netzfilters sind.

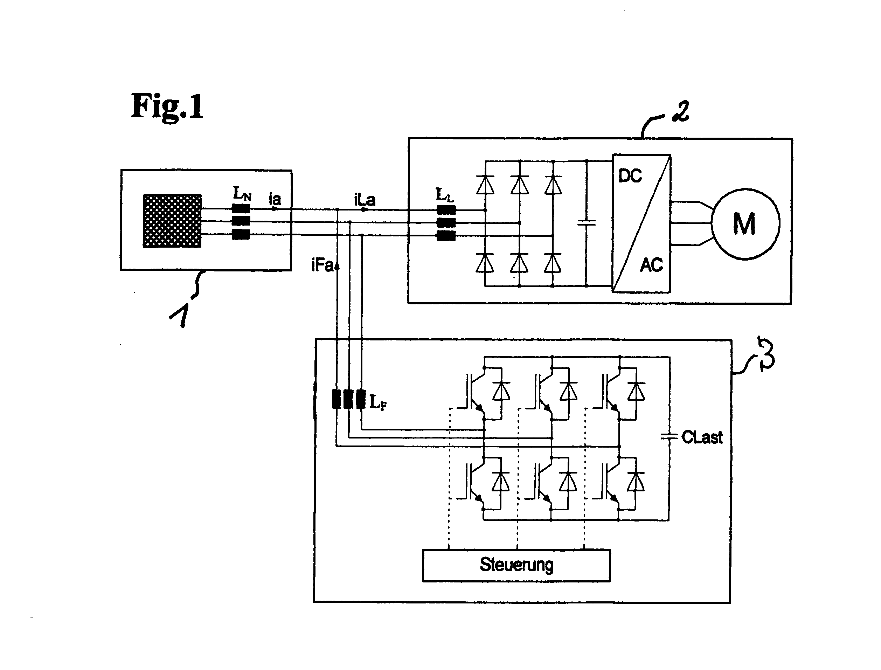

Die grundlegende Funktion eines gattungsgemäßen aktiven Netzfilters soll vorab anhand der in Figur 1 dargestellten Beispielschaltung erläutert werden. Block 1 der Fig. 1 charakterisiert ein 3-phasiges Stromversorgungsnetz, das über entsprechende Verbindungsleitungen mit einem nichtlinearen Verbraucher geschaltet ist, der durch den Block 2 gekennzeichnet ist. Die Eigenart des nichtlinearen Verbrauchers 2 ruft eine Blindleistung zwischen Versorger 1 und Verbraucher 2 hervor. Darüber hinaus wird das Versorgungsnetz 1 durch die während dem Betrieb der nichtlinearen Last 2 hervorgerufenen Oberschwingungsströme belastet. Als Gegenmaßnahme wird ein aktives Netzfilter 3 in die Schaltung integriert, das nicht nur die Blindleistung kompensiert und den Powerfaktor, das heißt das Verhältnis zwischen Wirkleistung und Scheinleistung der angeschlossenen Verbraucher 2, gegen nahezu eins regelt, sondern auch einzelne ausgewählte harmonische Oberschwingungen zu null kompensiert.

Die Indizes a, b und c stehen jeweils für eine Phase des 3-phasigen Stromversorgungsnetzes 1. Die Ströme ia, ib, ic kennzeichnen die Ströme, die aus dem Versorgungsnetz 1 fließen, wobei die Strangspannung ua, ub, uc des Versorgungsnetzes anliegen. Die Ströme iLa, iLb, iLc kennzeichnen die Ströme, die in die Last 2 hineinfließen und die Ströme iFa, iFb, iFc kennzeichnen die Ströme, die durch das Filter 3 zur Kompensation erzeugt werden. Weiterhin wird die abfallende Spannung an der kapazitiven Last des aktiven Filters 3 als UDC gekennzeichnet.

Größe und Gewicht des aktiven Netzfilters 3 sind davon abhängig, ob einzelne harmonische Schwingungen oder die komplette Blindleistung kompensiert werden soll. Für die selektive Kompensierung bestimmter harmonische Schwingungen sind kleinere Filterströme ausreichend, was den Einsatz kleinerer Induktivitäten und Halbleiter zur Umsetzung des Filters erlaubt.

Insbesondere in der Luftfahrt sind möglichst leichte und kompakte Geräte von großer Bedeutung, da der Kerosinverbrauch mit steigendem Eigengewicht des Flugzeugs zunimmt. Die Regelung sollte daher den benötigten Kompensationsstrom auf ein Minimum beschränken um damit die Effizienz des Filters zu maximieren.

Dieses Ziel soll zum einen durch das selektive Kompensieren weniger harmonischer Schwingungen verfolgt werden. Zum anderen ist es nicht erforderlich einzelne harmonische Oberschwingungen auf nahezu null zu regeln, sondern nur bis zu einem bestimmten Grenzwert zur Einhaltung einer entsprechenden Norm herunterzuregeln. Sind beispielsweise 5% der fünften Harmonischen zulässig, dann würde eine Regelung auf etwas weniger als 5% ein normkonformes Gerät bedeuten. Die gleiche Vorgehensweise gilt auch für Filter, die die entsprechenden Spannungen kompensieren. Um eine möglichst hohe Effizienz zu erreichen ist es ausreichend, eine normkonforme Kompensation zur Verfügung zu stellen.

Noch wichtiger als das Gewicht ist die Zuverlässigkeit des aktiven Netzfilters. Das Filter muß zu jedem Zeitpunkt die volle Kontrolle behalten und darf nicht andere Verbraucher stören. Eine schnelle und robuste Regelung, die die Grundfunktionen absichert, ist notwendig.

Aufgabe der vorliegenden Erfindung ist es, ein aktives Filter sowie die notwendigen modulartigen Filterbestandteile aufzuzeigen, welche die voranstehenden Anforderungen zufriedenstellend erfüllen.

Diese Aufgabe wird durch ein Modul für ein aktives Netzfilter zur Bestimmung der Referenzströme für die nachfolgende Stromregelung des Netzfilters gemäß den Merkmalen des Anspruchs 1 gelöst. Weitere vorteilhafte Ausführungen des Moduls sind Gegenstand der abhängigen Ansprüche 2 bis 6.

Demnach umfaßt das Modul ein Transformationsmittel zur Transformation der eingehenden Ströme, insbesondere der eingehenden Lastströme, oder der Netzspannungen in das ruhende α-β-Koordinatensystem. Im Anschluß wird über ein Berechnungsmittel die Wirkleistung aus den transformierten Größen berechnet. Die Bestimmung der Wirkleistung innerhalb des Berechnungsmittels erfolgt insbesondere unter Berücksichtigung der α- und β-Komponente der eingehenden Ströme, insbesondere der eingehenden Lastströme.

Bevorzugt werden mittels angeordneter Stromsensoren der Laststrom iL und der Filterstrom iF gemäß Figur 1 gemessen. Grundsätzlich spielt die Position der Stromsensoren jedoch keine Rolle, da über die Kirchhoff'sche Knotenregel der Dritte benötigte Strom berechnet werden kann. Die erfindungsgemäße Idee der vorliegenden Erfindung gilt also unabhängig von der gewählten Anordnung der entsprechenden Stromsensoren. Allerdings ändert sich je nach Position der Sensoren die Art bzw. der Wert der eingehenden Ströme. Beispielsweise ist ebenso eine Transformation der eingehenden Netzströme (ia, ib, ic), also der Ströme, die aus dem Versorgungsnetz fließen, möglich. Der Einfachheit halber ist im nachfolgenden Teil der Beschreibung nur von den eingehenden Lastströmen (iLa, iLb, iLc) die Rede ohne die Erfindung dadurch unnötig einzuschränken.

Erfindungsgemäß ist nunmehr ein zweites Berechnungsmittel vorgesehen, das unter Berücksichtigung der Wirkleistung und der α-β-Komponente der Netzspannung direkt die Referenzströme berechnet. Im Gegensatz zu bekannten Referenzstrommodulen werden durch das zweite Berechnungsmittel nicht die α- und β-Komponenten eines Filterstroms bestimmt, sondern unmittelbar die benötigten 3-Phasen-Referenzströme berechnet, die für eine nachgeschaltete Stromregelung eines aktiven Netzfilters erforderlich sind. Eine zusätzliche inverse Transformation der α- und β-Komponente der erzeugten Filterströme zurück ins 3-Phasen-System ist nicht erforderlich. Statt dessen können die erzeugten Referenzströme direkt von der nachgeschalteten Stromregelung als Soll-Filterströme verwendet werden.

Das erfindungsgemäße Modul kommt weiterhin ohne jegliche netzsynchronisierende Einrichtung, wie beispielsweise eine PLL oder ein Kalmanfilter aus.

Die Transformation in die α-β-Ebene erfolgt insbesondere über eine Clarke-Transformation.

Vorteilhafterweise ist ein Tiefpaßfilter vorgesehen, der dem ersten Berechnungsmittel nachgeschaltet ist. Der Tiefpaßfilter dient zur Extrahierung des DC-Anteils der bestimmten Wirkleistung, der dem zweiten Berechnungsmittel zur Verfügung gestellt wird.

Weiterhin kann vorgesehen sein, daß das zweite Berechnungsmittel den Anteil der Spannungsregelung der Zwischenkreisspannung eines aktiven Netzfilters berücksichtigt. Der Anteil dieser Spannungsregelung wird zusammen mit dem DC-Anteil des zwischengeschalteten Tiefpaßfilters an das zweite Berechnungsmittel zur Berechnung der Referenzströme weitergeleitet.

Darüber hinaus kann es sich als zweckmäßig erweisen, wenn die berechneten Referenzströme von den eingehenden Lastströmen subtrahiert werden und die erhaltenen Differenzströme als Sollströme für ein nachfolgendes Stromregelungsmodul am Modulausgang anliegen.

Die generierten Referenzströme sind unter Umständen nicht rein sinusförmig, weshalb die Kompensation regelmäßig nicht optimal verläuft. Aufgrund der Nichtberücksichtigung der Blindleistung kann eine Korrektur des Powerfaktors nicht ausgeschlossen werden, was jedoch für manche Applikationen unerwünscht ist. Aus diesem Grund kann es zweckmäßig sein, eine zusätzliche Tiefpaßfilterung der berechneten Referenzströme vorzusehen. In diesem Fall wird ein zusätzlicher Tiefpaßfilter am Ausgang des zweiten Berechnungsmittels vorgesehen, der eine Tiefpaßfilterung der einzelnen berechneten Referenzströme vornimmt.

Als besonders bevorzugt stellt sich ein selbstoptimierender Tiefpaßfilter heraus. Eine Selbstoptimierung des Tiefpaßfilters bedeutet in diesem Zusammenhang, daß die Filterparameter des Tiefpaßfilters zur Laufzeit in Abhängigkeit der vorliegenden Phasenverschiebung zwischen Netzströmen und Netzspannungen automatisch bestimmbar sind. Berücksichtigt die Filterparametrierung zusätzlich die Netzfrequenz, so lassen sich die Filterparameter des Tiefpaßfilters exakt berechnen.

Die Phasenverschiebung ist vorzugsweise aus den DC-Anteilen der durch das erste Berechnungsmittel bestimmten Wirk- und Blindleistung berechenbar.

Über die Wirk- und Blindleistung wird der Powerfaktor bzw. die Phasenverschiebung zwischen Netzstrom und Netzspannung berechnet, die im realen System vorhanden ist. Über die berechnete Phasenverschiebung und die bekannte Netzfrequenz wird der Tiefpaßfilter zur Laufzeit parametriert. Er kann dadurch exakt die reale Phasenverschiebung reproduzieren, so daß die Kompensationseinrichtung keinesfalls Blindleistung kompensiert, sondern sich auf die Oberschwingungen beschränkt.

Die zwangsläufige Dämpfung der Amplituden der Referenzströme durch den Tiefpaßfilter kann vorzugsweise durch zusätzlich eingefügte Verstärkungsglieder, welche ebenfalls zur Laufzeit parametriert werden, ausgeglichen werden.

Die vorliegende Erfindung betrifft des weiteren eine alternative Umsetzung des Moduls für ein aktives Netzfilter zur Bestimmung der Referenzströme. Gemäß den Merkmalen des Anspruchs 7 umfaßt das Modul eine Spannungsregelung für die Zwischenkreisspannung eines Netzfilters, die eine Lastwirkleistung bereitstellt. Erfindungsgemäß ist ein Berechnungsmittel vorgesehen, das aus der bereitgestellten Wirkleistung unter Berücksichtigung der am Modul eingangs anliegenden 3-Phasenspannungen eines 3-phasigen Versorgungsnetzes direkt die Referenzströme zur Ansteuerung des Stromregelungsmoduls eines aktiven Netzfilters berechnet.

Im Gegensatz zu bekannten Modulen zur Generierung der Referenzströme über die Spannungsregelung der Filterzwischenkreisspannung kann innerhalb der erfindungsgemäßen Regelstruktur auf eine Vorrichtung zur Synchronisierung mit der Netzfrequenz, das heißt eine PLL und damit auf die künstliche Generierung eines Sinussignals verzichtet werden. Die Wirkleistung wird nicht direkt berechnet, sondern über die Regelung der Zwischenkreisspannung bereitgestellt.

Ferner kann vorgesehen sein, daß eine von außen zugeführte Last-Wirkleistung in die Referenzstrombestimmung des Moduls einfließt.

Die Berücksichtigung einer extern zugeführten Wirkleistung ist insbesondere dann sinnvoll, wenn das Modul in einem aktiven Netzfilter betrieben wird, der nur einen einzigen Verbraucher kompensiert. In diesem Fall erweist es sich als vorteilhaft, wenn die extern zugeführte Last-Wirkleistung mittels eines analogen oder digitalen Signals direkt vom Verbraucher zur Verfügung gestellt wird. Das Modul ist vorzugsweise derart ausgeführt, so daß eine extern zur Verfügung gestellte Lastwirkleistung sofort berücksichtigbar ist. Die Dynamik bei der Berechnung der Referenzströme des Moduls wird dadurch deutlich verbessert.

In einem realen System weisen die Phasenströme und Phasenspannungen häufig keinen idealen sinusförmigen Verlauf auf. Da gewisse Regelkonzepte aktiver Netzfilter die ungefilterten Phasenspannungen direkt in die Berechnung der Referenzströme einbeziehen, kann je nach Spannungsqualität nur eine ungenügende Kompensationsleistung erzielt werden. Vor diesem Hintergrund wird ein Modul für ein aktives Netzfilter zur Kompensierung eines oder mehrerer harmonischer Ströme oder Spannungen gemäß den Merkmalen des Anspruchs 10 vorgeschlagen. Vorteilhafte Ausführungen sind Gegenstand der abhängigen Ansprüche 11 und 12. Das Modul weist ein Mittel zur selektiven Signalanalyse der eingehenden Ströme bzw. Spannungen auf.

Erfindungsgemäß ist dieses Mittel derart ausgeführt, so daß wahlweise ein oder mehrere harmonische Oberschwingungen des oder der Ströme oder Spannungen analysierbar sind und auf einen frei wählbaren Wert kompensierbar sind. Zur Kompensierung ist wenigstens ein entsprechender Korrekturstrom bestimmbar, der für die Korrektur der entsprechenden Referenzströme eines aktiven Netzfilters heranziehbar ist und vorzugsweise auf die Referenzströme aufaddierbar ist.

Als Eingangssignal des Mittels zur selektiven Signalanalyse dient vorzugsweise der tatsächlich fließende Netzstrom, der der Differenz aus Last- und Filterströmen entspricht. Vorzugsweise arbeitet das Mittel zur selektiven Signalanalyse auf der Grundlage eines l-Reglers, der den tatsächlichen harmonischen Gehalt der Phasenströme so lange herunterregelt, bis der gewünschte Wert erreicht wurde.

Vorzugsweise umfaßt das Mittel zur selektiven Signalanalyse ein Berechnungsmittel zur Berechnung der Soll-Wert für die sinus- und cosinus-bewerteten Anteile der n-ten Oberschwingung. Eine positive oder negative Abweichung von den durch das Berechnungsmittel bestimmten Sollwerten führt zu einem entsprechenden Korrekturstrom, der direkt auf den bestehenden Referenzstrom des aktiven Netzfilters aufaddierbar ist. Dadurch wird gewährleistet, daß eine maximal zulässige harmonische Oberschwingung nicht überschritten wird und der Filter durch übergenaues Kompensieren nicht unnötig belastet wird. Unnötige Verluste im aktiven Filter werden vermieden.

Zur Optimierung und Verbesserung des dynamischen und statischen Verhaltens des Moduls zur Kompensierung der harmonischen Ströme und Spannungen ist es denkbar, daß eine Vorsteuerung in das selektive Signalanalysemittel integriert ist. Hierdurch wird zusätzlich zum berechneten Korrekturstrom eine Korrekturspannung berechnet, die einer nachfolgenden Stromregelung eines aktiven Netzfilters zuführbar ist. Hierdurch erhält die Stromregelung eine Spannungsinformation, die eine erhebliche Entlastung der Stromregelung bewirkt.

Das vorgestellte Modul zur Kompensation ist uneingeschränkt für 1-phasige oder 3-phasige Systeme einsetzbar. Ferner spielt die Existenz eines neutralen Leiters bei dreiphasigen Systemen keine Rolle für die ordnungsgemäße Funktion des Moduls.

Die Erfindung ist ferner auf ein aktives Netzfilter zur Kompensierung der durch nichtlineare Verbraucher hervorgerufenen Einflüsse auf ein 3-phasigen Versorgungsnetz gerichtet, wobei das Filter wenigstens ein Referenzmodul zur Bestimmung von Referenzströmen, wenigstens ein Korrekturmodul zur Kompensierung harmonischer Oberwellen und wenigstens ein Stromregelungsmodul aufweist.

Das Referenzmodul generiert Referenzströme, die für das anschließende Stromregelungsmodul als Sollstromgrößen mittelbar oder unmittelbar bereitstellbar sind. Zur Korrektur harmonischer Oberschwingungen in der Netzspannung bzw. den Netzströmen ist ein Korrekturmodul vorgesehen, das zur Generierung entsprechender Korrekturströme ausgelegt ist. Die entsprechenden Korrekturströme werden ebenfalls mittelbar oder unmittelbar am Eingang des Stromregelungsmoduls zusammen mit den Referenzströmen bereitgestellt.

Insbesondere ist das Referenzmodul gemäß einer der voranstehend erläuterten Ausführungsmöglichkeiten des Moduls zur Bestimmung der Referenzströme ausgeführt. Für das aktive Netzfilter ergeben sich offensichtlich dieselben Vorteile wie für das genannte Modul, weshalb an dieser Stelle auf eine wiederholte Erläuterung verzichtet wird.

Ferner kann vorgesehen sein, daß das Korrekturmodul gemäß einer der vorteilhaften Ausführungen des Moduls zur Kompensierung eines oder mehrerer harmonischer Ströme und Spannungen ausgeführt ist. Auch in diesem Zusammenhang gilt, daß sich offensichtlich die gleichen Vorteile für das aktive Netzfilter ergeben.

Es kann vorgesehen sein, daß das Stromregelungsmodul auf Grundlage einer Pulsweitenmodulation der Ausgangsspannung basiert. Alternativ kann eine Zweipunktregelung des Stromes zweckmäßig sein.

Darüber hinaus können ein oder mehrere Sicherheitsfunktionen innerhalb des Stromregelungsmoduls realisiert sein.

Das erfindungsgemäße aktive Netzfilter ist insbesondere für die Entstörung eines Flugzeugbordnetzes geeignet.

Weitere Vorteile und Einzelheiten ergeben sich aus den in den Figuren dargestellten Ausführungsbeispielen. Es zeigen:

Fig. 1      eine Beispielsschaltung für den Aufbau eines Versorgungsnetzes mit nichtlinearen Verbrauchern und einem aktiven Filter,

Fig. 2      ein Schaltbild des erfindungsgemäßen aktiven Netzfilters,

Fig. 3    ein Schaltbild des erfindungsgemäßen Referenzmoduls zur Refe-renzstromgenerierung in einer ersten Ausführungsvariante,

Fig. 4    das Referenzmodul aus Fig. 3 in einer erweiterten Variante,

Fig. 5    das Referenzmodul aus Fig. 4 mit einem selbst optimierenden Tief-paßfilter,

Fig. 6    ein Schaltbild des Referenzmoduls zur Referenzstromgenerierung gemäß einer zweiten Ausführungsvariante,

Fig. 7    ein Schaltbild des erfindungsgemäßen Korrekturmoduls zur Korrek-tur der harmonischen Stromoberschwingungen.

Fig. 8    ein Schaltbild des erfindungsgemäßen Mittels zur selektiven Si-gnalanalyse aus Figur 7,

Fig. 9    ein Schaltbild des Mittels zur selektiven Signalanalyse gemäß Fig. 8 mit Vorsteuerung,

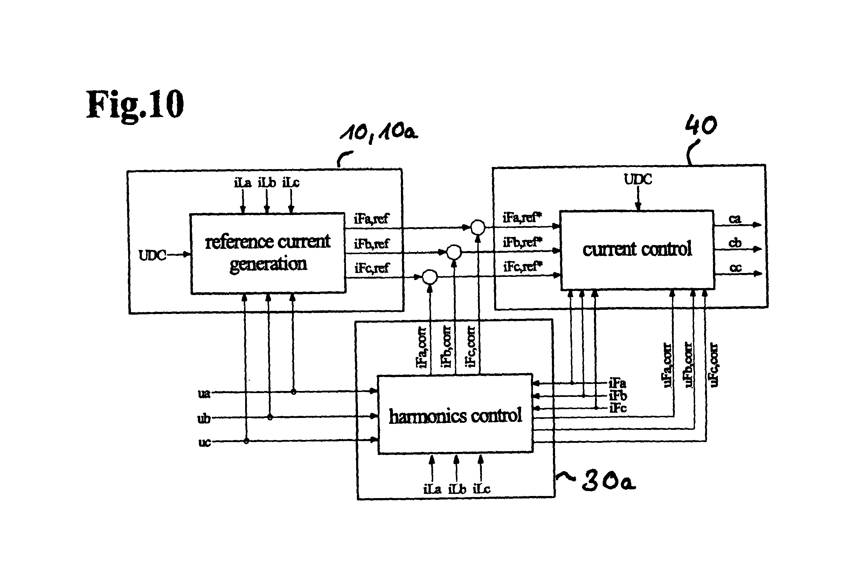

Fig. 10   die Struktur des aktiven Netzfilters mit einem Korrekturmodul ge-mäß der Ausführungen aus Fig. 9 und

Fig. 11   ein Schaltbild es Stromregelungsmoduls des erfindungsgemäßen aktiven Netzfilters.

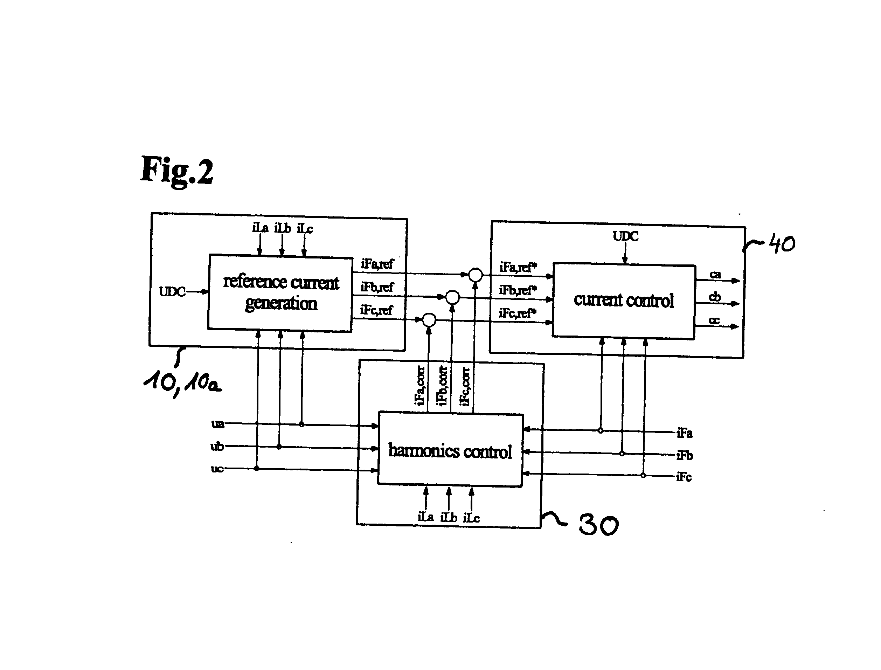

Die Kernstruktur des erfindungsgemäßen aktiven Netzfilters ist der Figur 2 zu entnehmen. Das dargestellte Filter wird beispielsweise in der Beispielschaltung an der Stelle des Blockes 3 eingesetzt, um potentielle durch den nichtlinearen Verbraucher 2 hervorgerufene Störungen zu kompensieren.

Am Eingang des Referenzmoduls 10 liegen die Lastströme iLa, iLb, iLc, sowie die Phasenspannungen ua, ub, uc des 3-phasigen Versorgungsnetzes 1 als Eingangsgrößen an. Das Referenzmodul 10 erzeugt zunächst unter Berücksichtigung der Eingangsgrößen die Referenzströme iFa,ref, iFb,ref, iFc,ref, die als Stromsollwerte für die Stromregelung der drei Phasen a, b, c innerhalb des Stromregelungsmoduls 40 verwendet werden. Das Stromregelungsmodul 40 enthält darüber hinaus Sicherheitsfunktionen und einen Schaltkreis zur Erzeugung der PWM-Signale, die für die Ansteuerung der Leistungsbauelemente benötigt werden.

Grundsätzlich ist die Hauptfunktion des Netzfilters 3 nur durch die Module 10, 40 bereits gegeben. Allerdings sind die Referenzströme iFa,ref, iFb,ref, iFc,ref nicht rein sinusförmig, da die Eingangssignale iLa, iLb, iLc ebenfalls nicht sinusförmig sind. Wie verzerrt die Referenzströme iFa,ref, iFb,ref, iFc,ref tatsächlich sind, hängt stark von der jeweiligen Anwendung ab. Ein verzerrter Referenzstrom iFa,ref, iFb,ref, iFc,ref kann zu einer ungenügenden Kompensationsqualität führen. Es bedarf eines Korrektursignals iFa,corr, iFb,corr, iFc,corr, welches auf das bestehende Referenzsignal iFa,ref, iFb,ref, iFc,ref aufaddiert wird und die Stromregelungssollwerte iFa,ref*, iFb,ref*, iFc,ref* erzeugt. Die Korrektursignale werden im Korrekturmodul 30 erzeugt und zwar unter Verwendung der eingehenden Phasenspannungen ua, ub, uc, der Lastströme iLa, iLb, iLc sowie der Filterströme iFa, iFb, iFc. Der detaillierte Aufbau der Module wird im nachfolgenden Beschreibungsteil näher erläutert.

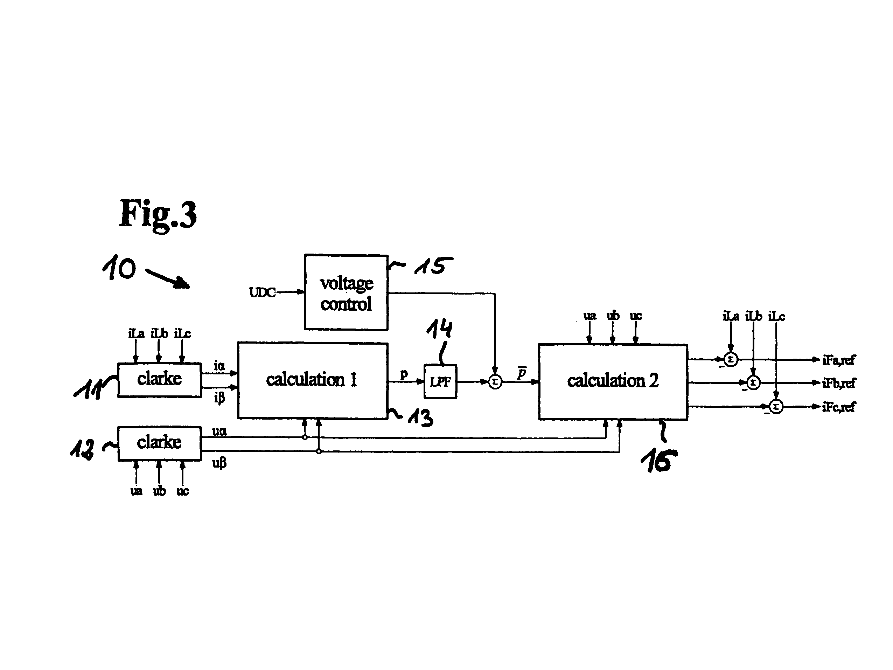

Das neue erfindungsgemäße Referenzmodul 10 zur Referenzstromgenerierung ist in Figur 3 gezeigt. Die Lastströme iLa, iLb, iLc und Netzspannungen ua, ub, uc werden durch die jeweiligen Blöcke 11, 12 in das ruhende α-β-Koordinatensystem transformiert. Die Transformation folgt dem Vorbild der Clarke-Transformation, die sich über die Formel

$$\begin{bmatrix} s_\alpha \\ s_\beta \end{bmatrix} = \sqrt{\frac{2}{3}} \cdot \begin{bmatrix} 1 & -\frac{1}{2} & -\frac{1}{2} \\ 0 & \frac{\sqrt{3}}{2} & -\frac{\sqrt{3}}{2} \end{bmatrix} \cdot \begin{bmatrix} s_a \\ s_b \\ s_c \end{bmatrix}$$

definieren läßt.

Im Block 13 wird die Wirkleistung *p* nach der Formel

$$p = u_\alpha i_\alpha + u_\beta i_\beta$$

berechnet. Mit dem Tiefpaßfilter 14 wird der DC-Anteil aus der Wirkleistung extrahiert. Die Summe $p$ aus dem Anteil der Spannungsregelung 15 für die Zwischenkreisspannung UDC des Netzfilters und der Wirkleistung $p$ wird dem zweiten Berechnungsmittel 16 eingangs zur Verfügung gestellt. Dort werden unter Berücksichtigung der Phasenspannungen ua, ub, uc, sowie der $\alpha$- und $\beta$-Komponente der Phasenspannungen ua, ub, uc mit Hilfe der Formeln

$$i_{a,ref} = \frac{\overline{p} \cdot u_a}{u_\alpha{}^2 + u_\beta{}^2} \, ,$$

$$i_{b,ref} = \frac{\overline{p} \cdot u_b}{u_\alpha{}^2 + u_\beta{}^2} \, ,$$

$$i_{c,ref} = \frac{\overline{p} \cdot u_c}{u_\alpha{}^2 + u_\beta{}^2} \, ,$$

die Soll-Netzströme $i_{a,ref}$, $i_{b,ref}$, $i_{c,ref}$ berechnet und anschließend von den Lastströmen iLa, iLb, iLc subtrahiert, um die Filter-Referenzströme iFa,ref, iFb,ref, iFc,ref zu erhalten.

Das erfindungsgemäße Modul kommt ohne jegliche netzsynchronisierende Einrichtung, wie eine PLL oder ein Kalmanfilter aus. Weiterhin erlaubt das Modul die direkte Berechnung der drei Referenzströme iFa,ref, iFb,ref, iFc,ref ohne die inverse Clarke-Transformation.

Die generierten Referenzströme iFa,ref, iFb,ref, iFc,ref sind nicht rein sinusförmig und daher kann auch die Kompensation nicht optimal erfolgen. Weiterhin ist in dem Referenzmodul 10 gemäß Figur 3 die Blindleistung q nicht berücksichtigt, weshalb der Filter nicht nur Harmonische kompensieren, sondern auch den Powerfaktor korrigieren würde.

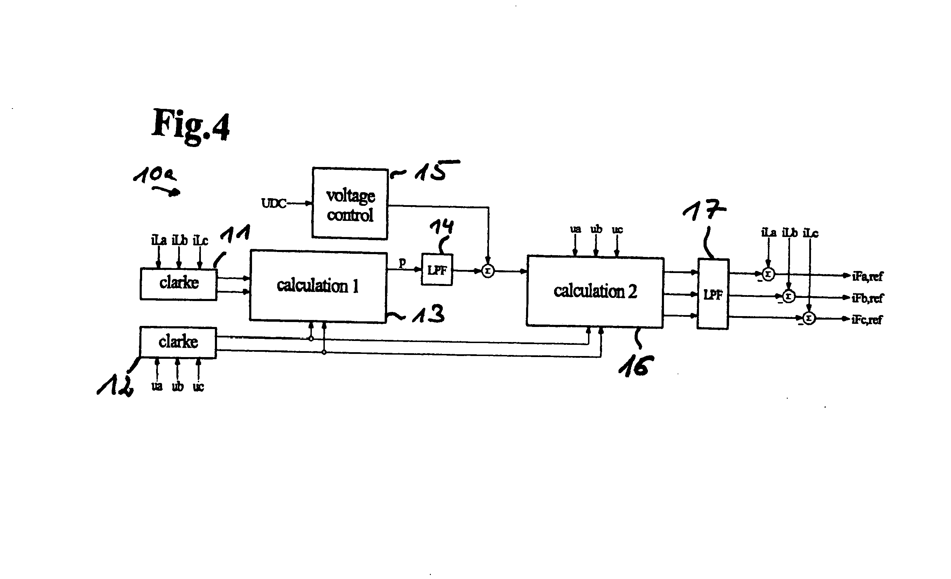

Diese Nachteile können durch die Erweiterung des Referenzmoduls 10a gemäß der Figur 4 umgangen werden. Hier wird ein zusätzlicher Tiefpaßfilter 17 eingebaut, der die berechneten Soll-Netzströme $i_{a,ref}$, $i_{b,ref}$, $i_{c,ref}$ tiefpassfiltert. Grundsätzlich ist es ebenfalls möglich, die Netzspannungen ua, ub, uc anstatt der Soll-Netzströme $i_{a,ref}$, $i_{b,ref}$, $i_{c,ref}$ zu filtern.

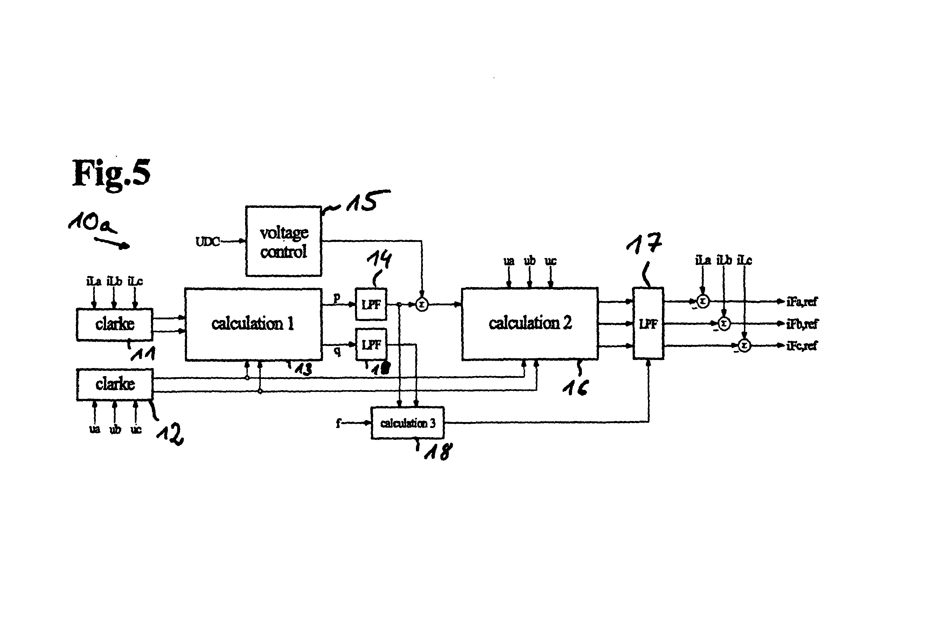

Eine Optimierung der Tiefpassfilterung wird erreicht, sobald die Filterparameter während der Filterlaufzeit bestimmt und entsprechend angepaßt werden. Zur Filterparametrierung ist die Schaltung in Figur 5 um den Block 18 erweitert, der die Phasenverschiebung zwischen Netzströmen ic, ib, ic und-spannungen ua, ub, uc aus den DC-Anteilen der Wirkleistung p und der Blindleistung q berechnet. Hierzu bestimmt das erste Berechnungsmittel 13 zusätzlich die Blindleistung q, deren DC-Anteil über den Tiefpassfilter 19 extrahiert wird.

Ist zusätzlich die Netzfrequenz f bekannt, dann ist eine exakte und optimale Berechnung der Filterparameter gewährleistet.

Ist die Frequenz f statt dessen unbekannt, so bleibt der Tiefpaß 17 bei seinen Startparametern, die für alle vorkommenden Frequenzen akzeptable Ergebnisse hervorbringt. Damit kann zwar die Phasenverschiebung nicht optimal erfolgen und der Filter würde etwas Blindleistung q kompensieren, doch die Qualität der Oberschwingungskompensation wird dadurch nicht beeinträchtigt.

Bevorzugt wird mittels angeordneter Stromsensoren der Laststrom iL und der Filterstrom iF gemäß Figur 1 gemessen. Grundsätzlich spielt die Position der Stromsensoren jedoch keine Rolle, da über die Kirchhoff'sche Knotenregel der Dritte benötigte Strom berechnet werden kann. Das vorgestellte Grundprinzip des Referenzmoduls 10, 10a ist unabhängig von der Lage der Sensoren anwendbar, allerdings würden sich die anliegenden Eingangswerte gemäß der entsprechenden Sensoranordnung ändern. Beispielsweise könnten durch geeignete Sensoranordnung im dargestellten Referenzmodul 10 der Figur 3 anstatt der Lastströme iLa, iLb, iLc die Netzströme ia, ib, ic Clarke-transformiert werden. Der Einfachheit halber werden in der Beschreibung nur konkrete Ausführungsbeispiele mit eingehenden Lastströmen iLa, iLb, iLc genannt. Die Erfindung ist aber keinesfalls darauf beschränkt.

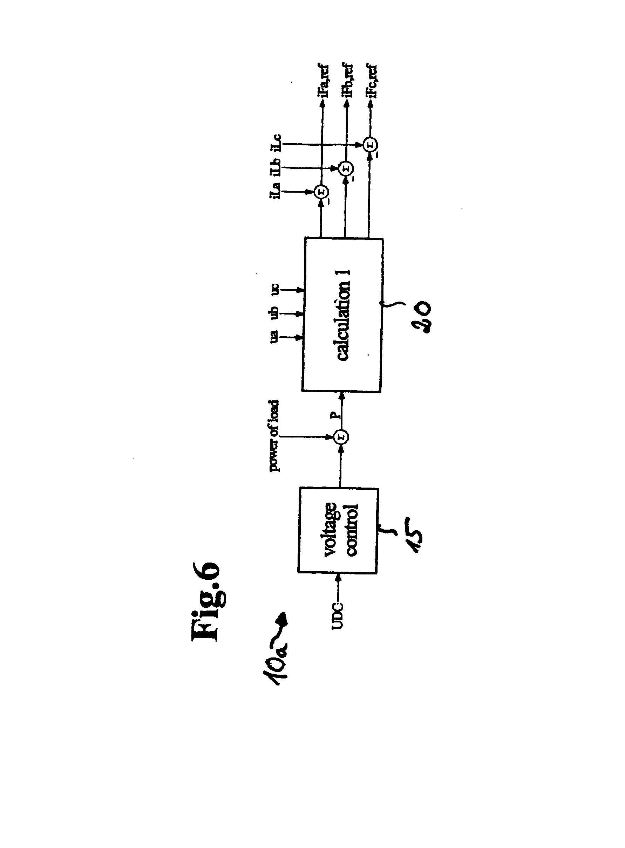

Ein alternativer Vorschlag zur Umsetzung des Referenzmoduls 10, 10a ist in Figur 6 dargestellt. Die Leistung P der Last wird nicht messtechnisch erfaßt, sondern von der Spannungsregelung 15 des Netzfilter-Zwischenkreises bestimmt. Im Vergleich zu ähnlichen Schaltungen besteht die Neuerung nun darin, daß auf eine PLL und damit auf die künstliche Generierung eines Sinussignals verzichtet wird.

Weiterhin ist hier die Möglichkeit gegeben, daß die Leistung der Last "power of load" in die Regelung des Moduls 10a eingeht. Dies ist besonders dann sinnvoll, wenn das aktive Netzfilter nur einen Verbraucher kompensiert. Es erhält von der Regelung des Verbrauchers 2 ein analoges oder digitales Signal "power of load" und kann dieses sofort berücksichtigen. Die Dynamik dieser Regelstruktur wird dadurch deutlich verbessert. Grundsätzlich kann diese Regelstruktur jedoch ohne zusätzliche Informationen über die Wirkleistung P des Verbrauchers 2 auskommen.

Der Berechnung der Soll-Netzströme $i_{a,ref}$, $i_{b,ref}$, $i_{c,ref}$ innerhalb des Moduls 20 erfolgt unter Berücksichtigung der Leistung P sowie den Phasenspannungen ua, ub, uc anhand der Formeln

$$i_{a,ref} = \frac{P \cdot u_a}{u_a{}^2 + u_b{}^2 + u_c{}^2} \, ,$$

$$i_{b,ref} = \frac{P \cdot u_b}{u_a{}^2 + u_b{}^2 + u_c{}^2} \, ,$$

$$i_{c,ref} = \frac{P \cdot u_c}{u_a{}^2 + u_b{}^2 + u_c{}^2} \, .$$

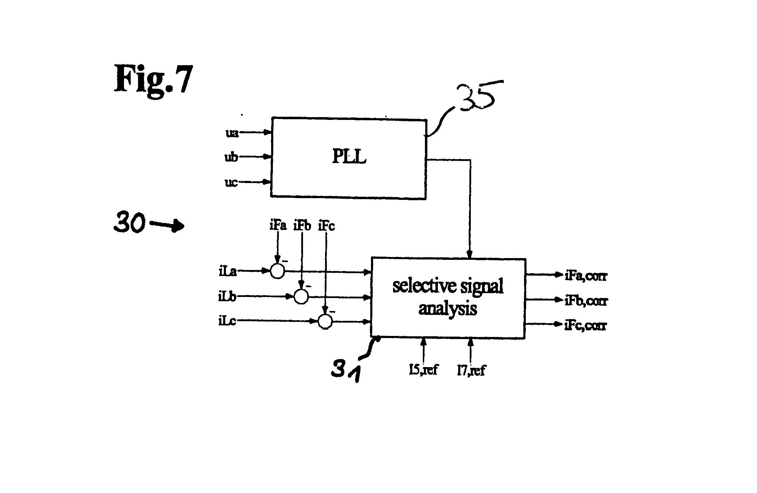

In einem realen System sind Phasenströme und Spannungen nicht ideal sinusförmig. Da bekannte Regelkonzepte die ungefilterten Phasenspannungen direkt in die Berechnung der Referenzströme iFa,ref, iFb,ref, iFc,ref miteinbeziehen, kann dies je nach Spannungsqualität zu einer ungenügenden Kompensationsleistung führen. Abhilfe wird durch das Korrekturmodul 30 gemäß der Figur 7 geschaffen. Das Modul 30 hat die Aufgabe, den Restgehalt bestimmter harmonischer Oberschwingungen zu bestimmen und die bestehenden Referenzströme iFa,ref, iFb,ref, iFc,ref zu korrigieren. Dazu werden zunächst die Last- iLa, iLb, iLc und die Filterströme iFa, iFb, iFc miteinander verrechnet, um den tatsächlich fließenden Netzstrom i zu erhalten.

Das Ergebnis wird per selektiver Signalanalyse durch den Block 31 auf bestimmte harmonische Oberschwingungen untersucht. Die eingesetzte Phasenregelschleife PLL 35 dient zur Regelung der Phasenlage der Spannungen ua, ub, uc und gibt die Phase phi aus.

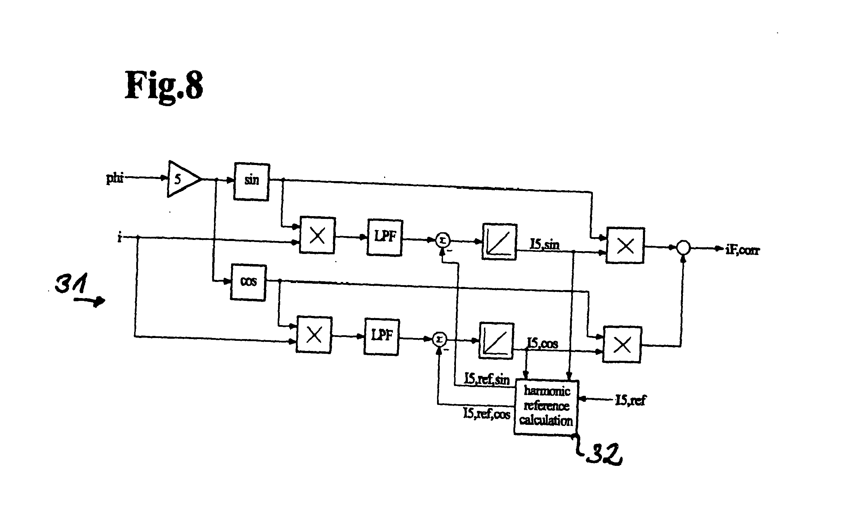

Eine detaillierte Darstellung des Blockes 31 für die selektive Signalanalyse ist der Figur 8 zu entnehmen. Die Struktur des Blockes 31 berechnet im dargestellten Fall den Real- und Imaginärteil der fünften Oberschwingung. Die Berechnung anderer Harmonischer erfolgt analog. Eine positive oder negative Abweichung von den im Block 32 berechneten Sollwerten I5,ref,sin, I5,ref,cos führt zu einem entsprechenden Korrekturstrom iFcorr, der wie bereits in Figur 2 erläutert, direkt zum bestehenden Referenzstrom iF,ref hinzuaddiert werden kann. Somit wird sichergestellt, daß die maximal zulässigen Harmonischen nicht überschritten werden und der Filter durch übergenaues Kompensieren nicht unnötig belastet wird. Sind beispielsweise für die 5. Oberschwingung 10A zugelassen, so würde es wirtschaftlich und technisch keinen Sinn machen die 5. Oberschwingung auf 0A herunterzuregeln. Dies verursacht nur unnötige Verluste im aktiven Filter. Statt dessen wird im Block 31 über die Formeln

$$\alpha = \arctan \cdot \left( \frac{I_{5,\sin}}{I_{5,\cos}} \right) ,$$

$$I_{5,ref,\sin} = I_{5,ref} \cdot \sin \alpha \, ,$$

$$I_{5,ref,\cos} = I_{5,ref} \cdot \cos\alpha \,,$$

oder alternativ mit Hilfe der Formeln

$$I_5 = \sqrt{I_{5,\sin}^2 + I_{5,\cos}^2} \,,$$

$$I_{5,ref,\sin} = \frac{I_{5,ref}}{I_5} \cdot I_{5,\sin} \,,$$

$$I_{5,ref,\cos} = \frac{I_{5,ref}}{I_5} \cdot I_{5,\cos} \,,$$

der Sollwert I5,ref,sin, I5,ref,cos für die sinus- und cosinusbewerteten Anteile der 5. Oberschwingung berechnet.

Die Struktur der Figur 8 arbeitet wie ein I-Regler und regelt den tatsächlichen harmonischen Gehalt der Phasenströme ia, ib, ic solange, bis der gewünschte Wert erreicht wurde. Der Regelkreis wird über die reale Schaltung geschlossen.

Die wesentliche Neuerung am Aufbau des Korrekturmoduls 30 ist insbesondere die Integration des Blockes 31, welcher eine zielgenaue und effiziente Kompensation ermöglicht.

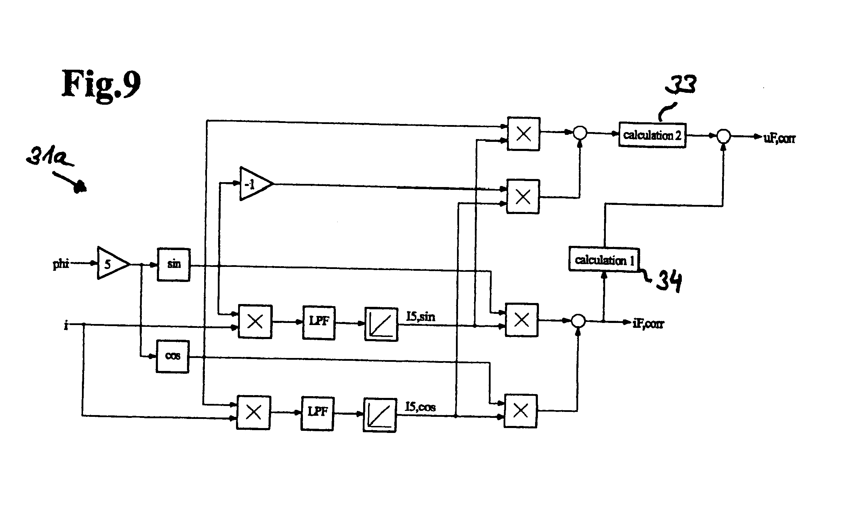

Die selektive Signalanalyse kann im nächsten Schritt weiter optimiert werden. Durch die Integration einer Vorsteuerung, wird das dynamische und statische Verhalten verbessert. Das gegenüber der Figur 8 geänderte Korrekturmodul 30a wird in Abbildung 9 detailliert dargestellt. Zusätzlich zum Signal iF,corr wird ein Signal uF,corr berechnet, welches der Spannung über einer Filterdrosseln $L_F$ entspricht (vgl. Figur 1). Das Stromregelungsmodul 40 erhält dadurch direkt eine Spannungsinformation und wird stark entlastet. Es ist grundsätzlich möglich alle vorkommenden Spannungsabfälle an Drosseln im Block 33 zu berechnen und sie der Stromregelung zuzuführen. Dies ist besonders wichtig, wenn noch zusätzliche Filterelemente neben den Hauptdrosseln vorhanden sind. Spannungsabfälle an ohmschen Widerständen werden im Block 34 berechnet.

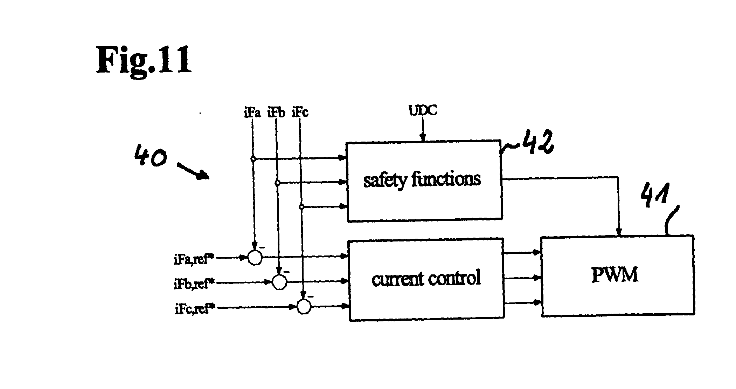

Eine mögliche Ausführung für das Stromregelungsmodul 40 aus Figur 2 ist der Figur 11 im Einzelnen zu entnehmen. Hauptaufgabe dieses Blocks ist die Regelung des Filterstromes iFa, iFb, iFc. Dazu wird der Sollstrom (iFa, ref) mit dem Istwert (iFa) verglichen und aus der Differenz ein Signal erzeugt, welches vom Block 41 in Mittel Pulsweitenmodulation (PWM) in Schaltpulse umgerechnet wird. Diese werden an die Halbleiterschalter weitergeleitet. Der Block 42 überwacht den Filterstrom iFa, iFb, iFc und die Zwischenkreisspannung UDC. Bei Überstrom- oder -spannung werden die PWM-Signale unterbrochen und der Filter deaktiviert.

## Patentansprüche

1. Modul für ein aktives Netzfilter zur Bestimmung der Referenzströme für eine nachfolgende Stromregelung mit einem Transformationsmittel zur Transformation, insbesondere zur Clarke-Transformation der eingehenden Ströme, insbesondere der eingehenden Lastströme, und/oder der Netzspannungen ins ruhende α-β-Koordinatensystem und einem ersten Berechnungsmittel zur Bestimmung der Wirkleistung der Last,
**dadurch gekennzeichnet,**
**dass** ein zweites Berechnungsmittel vorgesehen ist, dass unter Berücksichtigung der Wirkleistung und der α-β-Komponente der Netzspannung direkt die Referenzströme berechnet.

2. Modul nach Anspruch 1, **dadurch gekennzeichnet, dass** ein Tiefpassfilter zur Extrahierung des DC-Anteils der Wirkleistung vorgesehen, wobei der DC-Anteil dem zweiten Berechnungsmittel zuführbar ist.

3. Modul nach einem der vorhergehenden Ansprüche, **dadurch gekennzeichnet, dass** das zweite Berechnungsmittel weiterhin den Anteil der Spannungsregelung der Zwischenkreisspannung berücksichtigt.

4. Modul nach einem der vorhergehenden Ansprüche, **dadurch gekennzeichnet, dass** am Ausgang des Moduls die Differenzströme zwischen den berechneten Referenzströmen und den eingehenden Strömen, insbesondere den eingehenden Lastströmen, als Ausgangssignal anliegen.

5. Modul nach einem der vorhergehenden Ansprüche, **dadurch gekennzeichnet, dass** ein optionaler Tiefpassfilter zur Tiefpassfilterung der Referenzströme vorgesehen ist.

6. Modul nach Anspruch 5, **dadurch gekennzeichnet, dass** der optionale Tiefpassfilter selbstoptimierend ausgeführt ist, vorzugsweise indem die Filterparameter zur Laufzeit unter Berücksichtigung der Phasenverschiebung zwischen Netzströmen und -spannungen und/oder der Netzfrequenz bestimmbar sind.

7. Modul für ein aktives Netzfilter zur Bestimmung der Referenzströme für eine nachfolgende Stromregelung mit einer Spannungsregelung für die Zwischenkreisspannung eines Netzfilters, die eine Last-Wirkleistung bereitstellt, **dadurch gekennzeichnet,**
**dass** ein Berechnungsmittel vorgesehen ist, dass aus der bereitgestellten Wirkleistung unter Berücksichtigung der am Modul eingangs anliegenden drei Phasenspannungen eines dreiphasigen Netzes direkt die Referenzströme berechnet.

8. Modul nach Anspruch 7, **dadurch gekennzeichnet, dass** eine optional zugeführte Last-Wirkleistung in die Referenzstrombestimmung einfließt.

9. Modul nach Anspruch 8, **dadurch gekennzeichnet, dass** die Last-Wirkleistung in analoger oder digitaler Signalform von einem Verbraucher bereitgestellt ist.

10. Modul für ein aktives Netzfilter zur Kompensierung eines oder mehrerer harmonischer Ströme oder Spannungen mit einem Mittel für die selektive Signalanalyse,
**dadurch gekennzeichnet,**
**dass** mit dem Mittel für die selektive Signalanalyse wahlweise ein oder mehrere harmonische Oberschwingungen des oder der Ströme oder Spannungen analysierbar sind und auf einen frei wählbaren Wert kompensierbar sind, indem wenigstens ein entsprechender Korrekturstrom bestimmbar und ausgebbar ist.

11. Modul nach Anspruch 10, **dadurch gekennzeichnet, dass** das Modul in 1- oder 3-phasigen Systemen mit oder ohne Neutralleiter einsetzbar ist.

12. Modul nach einem der Ansprüche 10 oder 11, **dadurch gekennzeichnet, dass** das Mittel für die selektive Analyse wenigstens eine Spannung berechnet, die für eine nachfolgende Stromregelung eines aktiven Netzfilters als Vorsteuersignal dient.

13. Aktives Netzfilter zur Kompensierung der durch nichtlineare Verbraucher hervorgerufenen Einflüsse auf ein 3-phasiges Versorgungsnetz mit wenigstens einem Referenzmodul zur Bestimmung von Referenzströmen, wenigstens einem Korrekturmodul zur Kompensierung harmonischer Oberwellen und wenigstens einem Stromregelungsmodul, wobei die generierten Referenzströme des Referenzmoduls und die generierten Korrekturströmen des Korrekturmoduls mittelbar oder unmittelbar am Eingang des Stromregelungsmoduls anliegen und für die Stromregelung Berücksichtigung finden.

14. Aktives Netzfilter nach Anspruch 13, **dadurch gekennzeichnet, dass** das Referenzmodul gemäß einem der Ansprüche 1 bis 6 oder einem der Ansprüche 7 bis 9 ausgeführt ist.

15. Aktives Netzfilter gemäß einem der Ansprüche 13 oder 14, **dadurch gekennzeichnet, dass** das Korrekturmodul gemäß einem der Ansprüche 10 bis 12 ausgeführt ist.

16. Aktives Netzfilter nach einem der Ansprüche 13 bis 15, **dadurch gekennzeichnet, dass** das Stromregelungsmodul aus einem klassischen p-Regler mit oder ohne Vorsteuerung und Pulsweitenmodulation der Ausgangsspannung besteht oder aus einem Zweipunktregler oder aus einem Linearregler oder aus einem anderen Typ von Stromreglern.

17. Verwendung eines aktiven Netzfilters zur Entstörung insbesondere eines Flugzeugbordnetzes.

# Fig.1

# Fig.2

**Fig.3**

10

iLa iLb iLc

11 clarke

iα
iβ

UDC → voltage control — 15

calculation 1

p → LPF → Σ → p̄ — 14

13

ua ub uc

calculation 2

iLa iLb iLc

Σ → iFa,ref
Σ → iFb,ref
Σ → iFc,ref

16

12 clarke

uα
uβ

ua ub uc

Fig.4

Fig.5

EP 2 437 383 A2

# Fig.6

# Fig.7

# Fig.8

Fig.9

# Fig.10

# Fig.11

EP 2 437 383 A2